# EUROPEAN PATENT APPLICATION

(11) **EP 2 133 783 A1**
(43) Date of publication of application: **16.12.2009**
(21) Application number: 08157858.5
(22) Date of filing: 09.06.2008
(51) Int. Cl.: G06F 3/06, G06F 17/30, H04N 5/00

(54) **Data storage server, stored set of instructions, and method of controlling data access**

(71) Applicant: Deutsche Thomson OHG, 30625 Hannover (DE)
(72) Inventor: Maas, Johann, 30853 Langenhagen (DE); Kochale, Axel, 31832 Springe (DE); Schuetze, Herbert, 29227 Celle (DE)
(74) Representative: Thies, Stephan

(57) **Abstract**

A data storage server supporting data streaming, e.g. of AV data, and file access operations, including Read/Write operations, and a method of, and stored instructions for, controlling streaming and file access requests. An exemplary server may comprise a data store including a data interface including an access lock having an IDLE state (50), a STREAM state (66) permitting data streaming access, and an RW state (54) permitting file access. The access lock is configured to permit transition from the IDLE state (50) either to the STREAM state (66) or to the RW state (54) but not to permit transition to both states concurrently. An exemplary method implements functions associated with the access lock. The exemplary method, in granting a request for data streaming access, locks in the STREAM state (66) and denies file access requests, and in granting a request for file access to the data store, locks in the RW state (54) and delays a subsequent data streaming access request until the file operation has exited.

## Description

This invention relates to data storage servers. In particular, exemplary embodiments relate to data storage servers having streaming capability.

U.S. Patent No. 6,816,904 to Ludwig, et al. discusses a video storage environment for a networked multimedia system comprising a plurality of workstations, each with audio and video reproduction and capture capabilities. The video storage environmental comprises one or more storage servers. It is proposed that each video storage server comprises at least one storage cell. Each storage cell internally would comprise at least one storage disk, at least one converter, and at least one storage disk, at least one converter, and at least one storage cell manager. Various methods of resource allocation under various conditions and policies are discussed where there are pluralities of like entities. Transfers of video files among storage disks anywhere in the storage environment are proposed, and purportedly the same video file may be used simultaneously by multiple users and types of applications. It is asserted the approach can be extended to included multimedia files comprising any of graphics animations, dynamic annotations, text, and other media accompanying the stored video.

U.S. Patent No. 6,115,740 to Mizutani discusses a video server system for dynamic content allocation for efficient services. The video server system has a plurality of video servers having respective contents storing units for storing contents and respective contents delivering units for delivering contents. A management server has a stream supply information managing unit intended for managing stream supply information relative to the delivery of the contents and a contents dynamic allocating unit intended for controlling the storage of the contents between the video servers to dynamically allocate contents based on stream supply information from the stream supply information managing unit.

In a streaming server that allows for file based operations, including real-time streaming access as well as non-real-time file access, there is potential for non-real-time file access requests to interfere with ongoing or scheduled streaming accesses, so that active stream transfers run a risk of starvation or of falling below their required bandwidth. In addition, a connected client may potentially send a file access request to a streaming server at an inappropriate moment, because the state of the server normally is not monitored by a client. Further, the server operation may be disrupted by intentional Denial of Service attacks, e.g. by sending file read/write requests from a compromised client while the server is in a streaming mode.

In the field of resource conflict handling, a so-called "readers-writers" problem that can arise when read and write access requests to shared memory are called concurrently from several tasks, may be addressed by permitting either memory read access or memory write access, and permitting read access concurrently by several readers while permitting write access by a single writer at a time.

The present invention addresses problems that can arise during operation of a data storage server having data streaming capability, when a client sends a file access request to the server while the server is recording or effecting playback of a data stream.

A data storage server supporting data streaming and file access requests according to the invention is described in claim 1. In a particular embodiment, the server may incorporate an access lock that may transition from an IDLE state to a STREAM state in response to a data streaming access request, but file access requests are denied while the access lock is in the STREAM state. The access lock may transition from the IDLE state to a RW state in response to a file access request, but while the access lock is in the RW state, response to a streaming access request is delayed until the RW state has been exited. This permits streaming requests to be handled with a higher priority than file access requests. The access lock may be implemented, for example, by logic incorporated in data store controller logic or by a data store controller driver instructions.

A stored set of instructions executable in conjunction with a data store of a data storage server to control data streaming access and file access to the data store is set forth in claim 10. In an exemplary embodiment, the instructions may implement an access lock to enable the access lock to respond to a data streaming request while the access lock is in a RW state during a RW operation, by delaying the streaming request until the RW state has exited.

A method of controlling data access requests to a data store of a data storage server that supports data streaming and file access operations is set forth in claim 14. The method may be implemented under control of a processor executable set of instructions.

Embodiments of the present invention are described, by way of example, with reference to the accompanying drawings. The embodiments to be described merely exemplify the invention. Possible modifications will be apparent to a person skilled in the art. The gist and scope of the present invention is set forth in the appended claims of this application.

Fig. 1 is a block diagram of a network including a data storage server and client devices for implementing an exemplary embodiment of the invention.

Fig. 2 is a state diagram showing state transitions pertinent to operation of Fig. 1 according to an exemplary embodiment of the invention.

Figs. 3 and 4 depict logic flow diagrams pertinent to a method of operation of Fig. 1 in accordance with an exemplary embodiment of the invention.

Fig. 5 depicts functional interfaces between an operating system and hardware components of a data storage server as shown in Fig. 1, and user level applications.

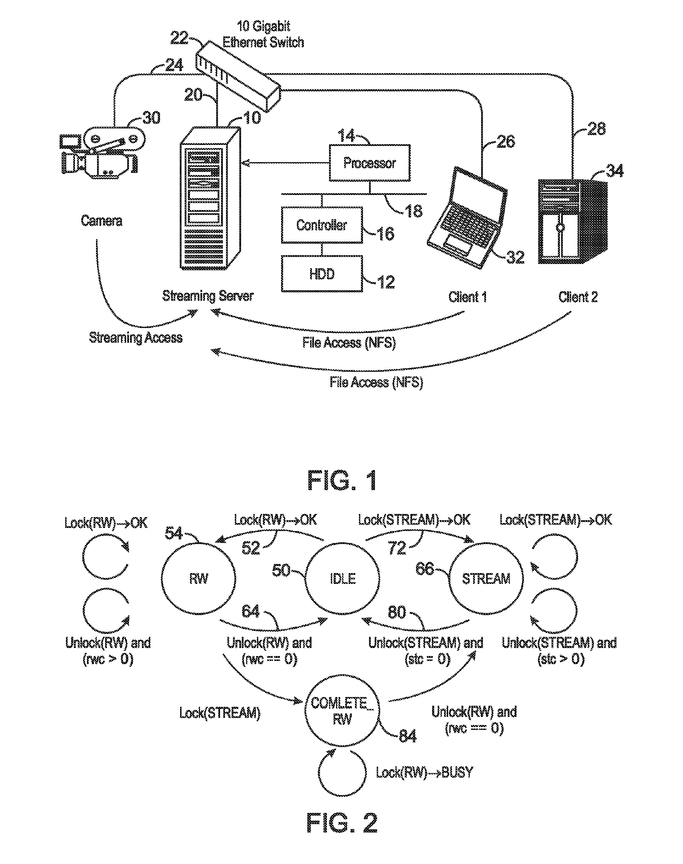

The network structure 100 depicted in Figure 1 includes a network data server 10 including a data store 12, e.g. an HDD array, and is configured to support data streaming operations as well as data file I/O operations, including file read and write - RW - operations and, for example, changing file attributes, file renaming, and file deletion. Access requests to the data store 12 are input to a processor 14 which implements the requests in conjunction with a storage controller 16 coupled to the processor 14 over a bus 18. The controller 16 provides digital data interface functionality between the processor 14 and the data store12.

A communication link 20 couples the data storage server 10 to a network switch 22, e.g. a 10 gigabit Ethernet switch, which is coupled by communication links 24, 26 and 28, respectively to a camera/recorder 30, and client devices, e.g. a portable computer 32 and a CPU, e.g. PC unit 34.

The storage server 10 preferably is capable of processing streaming AV data workflow for digital cinematography, providing very high bandwidth, e.g. 2 to 8Gbps, and the ability to respond to data streaming requests in real time to satisfy requirements for streaming uncompressed AV data, e.g. 2K and 4K HDTV film data, communicated from the camera/recorder 30. In addition, the data storage server 10 permits file access to the data store 12 using, for example Network File System - NFS - functionality for downloading recorded data streams from the data store 12 to a non-real-time client device, e.g. the portable computer 32 or the CPU unit 34, for transportation or for data processing. Because of the use of a common, e.g. 10 Gigabit, communication link type, several data stream sources, e.g. camera/recorders, and data client devices, e.g. portable computer 32 and CPU unit 34, may concurrently be connected to the data storage server 10.

In accordance with an exemplary embodiment, the data storage server 10 incorporates a data interface including an access lock function such that streaming access requests and file access activities to the server are mutually exclusive. The access lock function should intercept all I/O access attempts to the data store 12 and suitably, the access lock may be implemented by the data store controller 16 using hardware logic, or by a driver for the storage controller 16. The locking facility is operable to regulate usage of storage and storage bandwidth resources by granting access to the data store 12 either for regular file system usage or for data streaming. When the server 10 is in a streaming mode, file access requests are not granted thereby preserving the full available computing power and bandwidth for streaming operations.

An example of an access lock functional embodiment will be described in conjunction with Figs. 2, 3 and 4, and the functionality described is also illustrated by the pseudo code shown below and to which reference will be made in the following description.

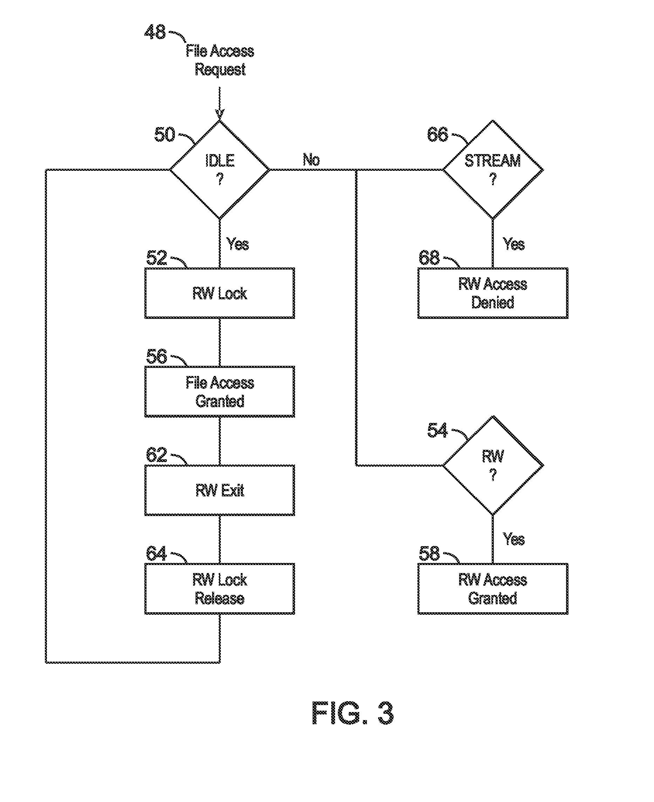

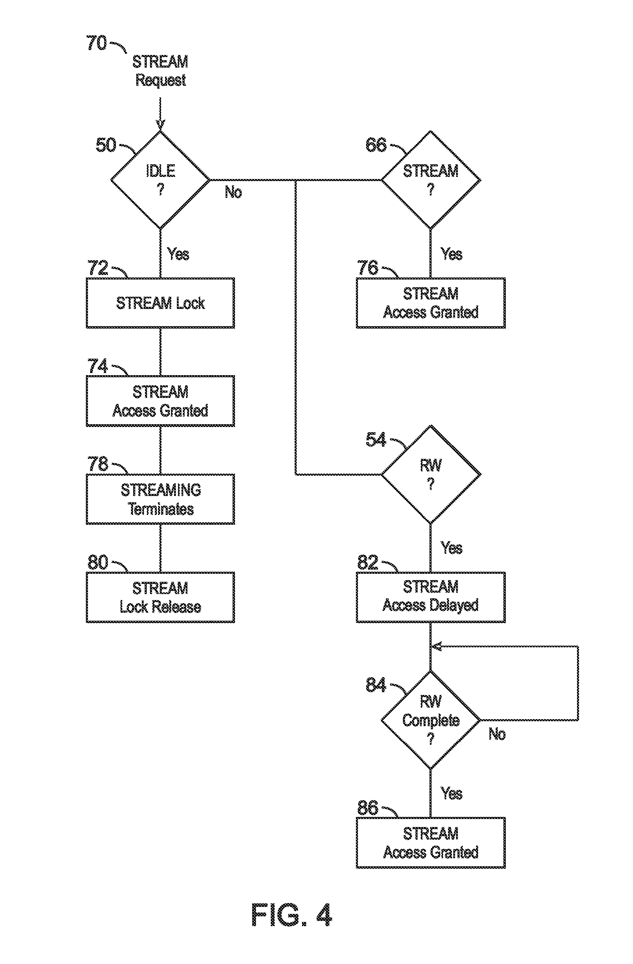

Fig. 2 shows an example of a state diagram and Figs. 3 and 4 show an example of a flow diagram depicting access lock functionality. In operation of an embodiment of the access lock function, three base states are defined:
"IDLE" - in which no data store access is occurring.
"RW" - in which at least one file access operation may occur.
"STREAM" - in which at least one data streaming operation may occur.

Referring to the state diagram of Fig. 2 and the flow diagram shown by Fig. 3, a file read or file write access request input to the processor 14, e.g. from the client 32 or the client 34 is passed 48 to the lock controller 16 data interface in conjunction with which the access lock function is implemented. If the access lock is in the IDLE state 50, the access lock responds 52 by locking in the RW state 54 and then granting access 56 for the requested file read-write operation. In one embodiment, further file access requests received by the processor 14 while the access lock is in the RW state 54 also may be granted 58 so that several read/write requests, including other file access requests, may have concurrent access to files stored by the data store 12, in the manner of a conventional file server. At the end of the file I/O operation, or of all file I/O operations if RW access has been granted to more than one, the RW state is exited 62, the RW lock is released 64 and the access lock returns to the IDLE state 50.

If when a file access request is received by the processor 14, the access lock is not in an IDLE state 50 but instead is in a STREAM state 66, the file access request is denied 62.

Referring still to Fig. 2 and Fig. 4, a data streaming access request input to the processor 14, e.g. from the camera is passed 70 to the lock controller 16 data interface. If the access lock is in the IDLE state 50, the access lock responds 72 by locking in the STREAM state, granting access 74 for the requested data streaming operation, and the server 10 switches to a data streaming mode. The switching is done by assigning to state logic a predefined value associated with the state to be entered. In one embodiment, further data streaming access requests received by the processor 14 while the access lock is in the STREAM state 66 also may be granted 76 so that several data streaming access operations may occur concurrently. If there is no available bandwidth to support another data streaming operation, as shown in the pseudo code, the access locking function returns BUSY, as indicated in the pseudo code. In the data streaming state 66, the full available bandwidth becomes accessible for real-time streaming of AV data content, from the camera 30 as well as from any other data stream sources connected to the server 10. Because delivering a data stream can involve multiple read or write actions in conjunction with the data store 12 of the server 10, the stream lock is grabbed 72 during the streaming set up process in one function - see pseudo code function "start_stream ()" - and released 80 in another function - see pseudo code function "stop_stream ()" - but not until the streaming operation has completed 78.

The maximum number of concurrently served data streams may differ within the limits of the available bandwidth, and may be set by the variable "max-streams"-see pseudo code below. For the particular case that the max-streams variable is set to "1", the multi-streaming capability is implicitly disabled on the server 10 and the full available bandwidth of the server 10 becomes potentially accessible to serve a single data stream. The "max-streams" value can be set at runtime to adapt the number of parallel data streams to the available bandwidth.

In a modification, e.g. see Fig. 2 and Fig. 4, the locking state machine may be extended to include a pre-locking state to incorporate a data streaming request priority control function. If a data streaming request is received by the processor 14 while the access lock is in the RW state 54, instead of being denied, the data streaming request is delayed 82 until the file access operation has been completed 84 and the RW state has been exited; the data streaming access request is then granted 86. This "pre-locking" state function is described in the pseudo code by the operations:
"if(state==COMPLETE_RW) return BUSY;" and
"if(rwc > 0) state = COMPLETE_RW".
These operations may be omitted if the pre-locking state function 82 - 86 is not implemented. The "pre-locking" modification is advantageous because it enables the server 10 to process data streaming requests with a higher priority than normal I/O file access requests.

Example of pseudo code for processor implementation of the operations described above with reference to Figs. 1-4:

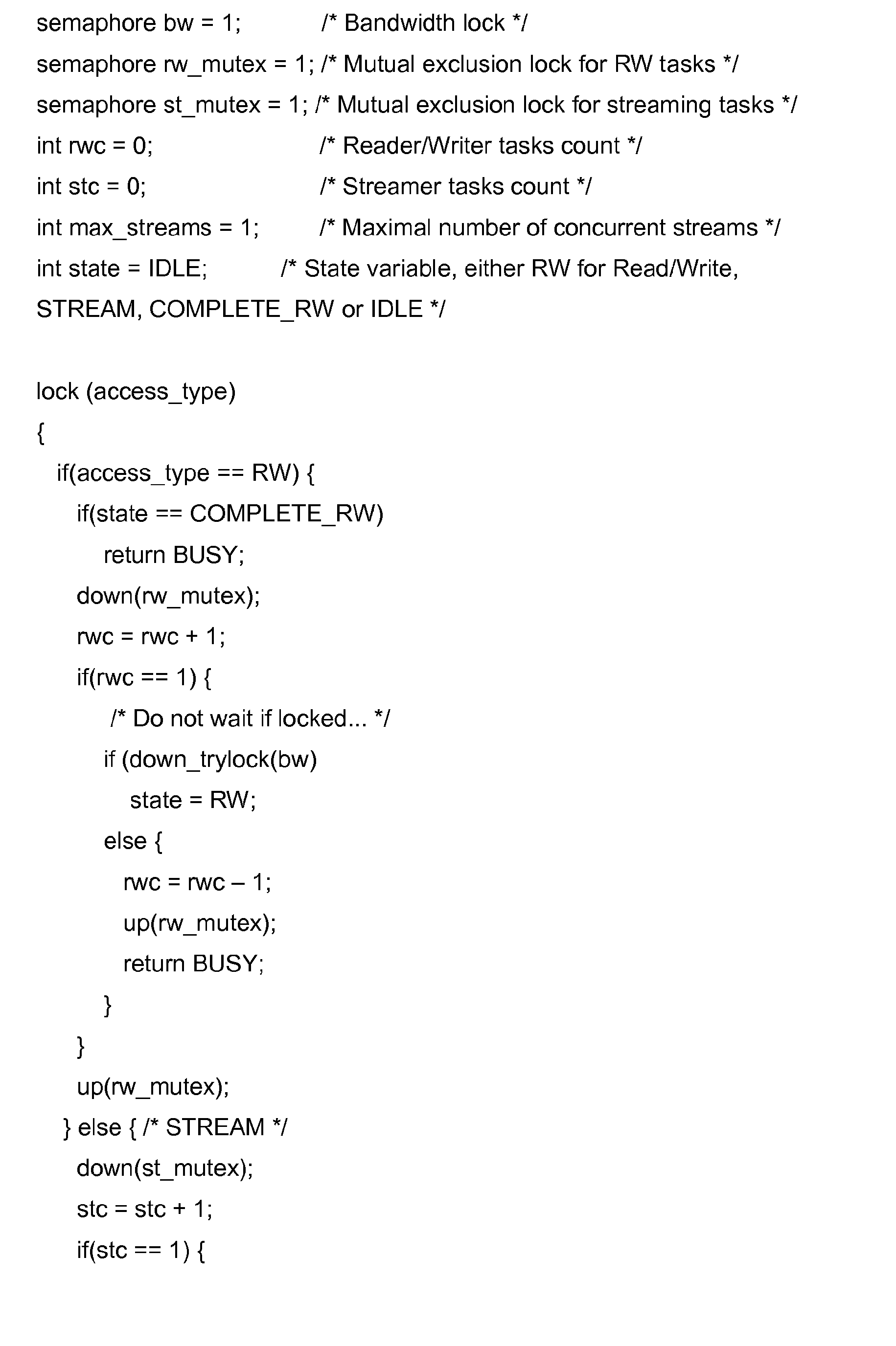

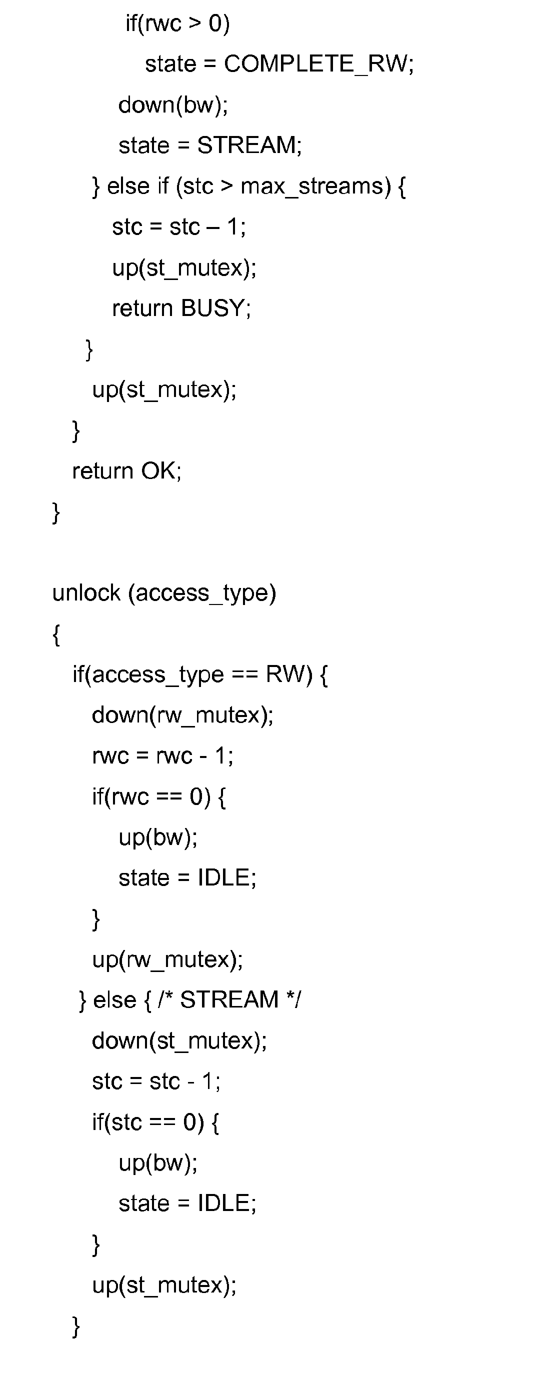

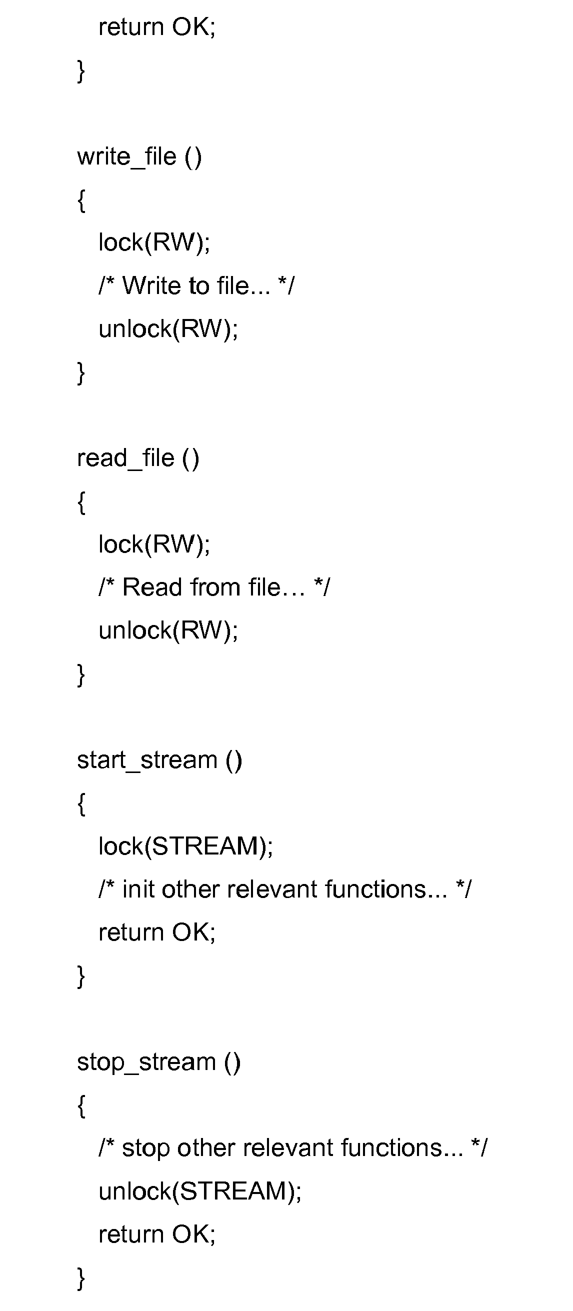

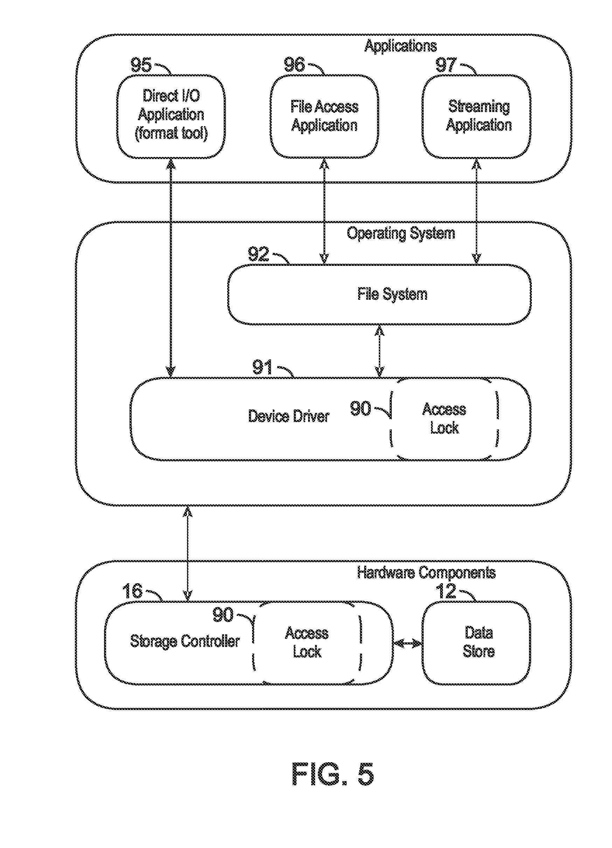

As mentioned above, the access lock 90, which is responsible for maintaining the states shown in Figure 2, preferably is implemented either directly in storage controller 16 using hardware logic or as part of the low-level device driver 91 for storage controller, both embodiments illustrated in Figure 5. This functional closeness of the access lock 90 to the data store 12 enables the locking facility to control all I/O requests to the data store, and, if necessary, to reject file access or other non-streaming I/O requests received while the system is in the streaming mode. Placing the access lock 90 one or more levels higher in the operating system hierarchy, e.g. in the file system layer 92, would exclude from control I/O requests sent by applications, e.g. formatting tool 95, that directly access the device driver 91, thus bypassing file system layer 92, as shown in Figure 5.

If a data transfer request is received from an application 95 directly, then the requesting process has to obtain the access lock 90 prior to moving data to or from the data store 12. The accessing task also has to release the lock 90 when the moving of data is finished and the bandwidth is freed again. This procedure of locking and releasing the lock 90 needs to be repeated each time the device driver is accessed by the application 95, i.e. for each chunk of data to be transferred.

However, when a data transfer request, e.g. from file access application or streaming application 97, is received through a file system 92, it is more appropriate that the file system function which is to access the data store 12 sends a request to the device driver 91 of the storage controller 16 to close the access lock 90 prior to copying data to or from files on the data store 12. The same file system function has to release the lock 90 again when data transfer has completed. Requesting the lock 90 from a file system and not from driver functions makes sense in this case, because a file system function may want to move multiple chunks of data in an atomic operation, in order to ensure that the call is either processed completely or not at all. All data transfer tasks that perform either direct I/O, e.g. application 95, or access files through a file system using regular file system functions on data store 12, e.g. application 96, must grab the RW lock 54. Applications, e.g. application 97, that stream data must use start_stream and stop_stream calls, as shown in the pseudo code above, for obtaining and releasing the STREAM lock 66. These two functions may be implemented as extensions to a regular file system API.

Generally, existing file systems, storage controllers for secondary storage, and/or device drivers for these storage controllers can be adapted to operate with the proposed access lock. The locking module preferably resides in a storage controller or a device driver for storage controller and has to implement at least the "lock" and "unlock" algorithms shown in the pseudo code listing above. Extensions to existing file systems are limited to obtaining and releasing the RW lock 54 in each of the top-level functions that may perform I/O operations on storage, e.g. on data store 12. Also, each file system that is to support the protection of bandwidth resources, e.g. for applications 95, 96, 97, as discussed above in relation to embodiments of the present invention should provide an extension to its API to include at least the functions "start_stream" and "stop_stream" shown in the pseudo code listing above.

In order to improve user-friendly implementation of the access locking functions described above, the lock state of the server 10 may be indicated by providing visual indication of the current locking state externally of the server 10. For example, one or more visual indicators 88 may be located on the casing of the server, and operatively connected to the controller so that the locking state is visually displayed. In one example, a single tricolor light emitting diode -LED- could be connected to provide a green display in an IDLE state of the access lock, a red display in the STREAM state, and yellow in the RW state. In another example, two LEDs could be used, one providing a monochrome - e.g. green - and the other providing a bicolor display - e.g. either red or yellow, with access lock state significations as described above.

The skilled person will appreciate that combining any of the above-recited features of the present invention together may be desirable.

## Claims

1. A data storage server (10) supporting data streaming and file access operations, the server (10) comprising:
- a data store (12) including a data interface configured to permit streaming data access and file access to the data store (12);
- an access lock (90) having an IDLE state (50), a STREAM state (66) permitting a streaming access request, and an RW state (54) permitting a file access request, the access lock (90) configured to permit transition from the IDLE state (50) either to the STREAM state (66) or to the RW state (54) but not to permit transition to both the STREAM state (66) and to the RW state (54) concurrently.

2. A data storage server (10) according to claim 1, wherein when in the RW state (54) the access lock (90) is configured to respond to a streaming access request by delaying the streaming access request until the read-write state has been exited.

3. A data storage server (10) according to claim 1, wherein in the STREAM state (66) the access lock (90) is configured to permit concurrent access to the data store (12) in response to more than one streaming access request.

4. A data storage server (10) according to claim 1, wherein in a read-write state the access lock (90) is configured to permit concurrent access to the data store (12) in response to more than one file access request.

5. A data storage server (10) according to claim 1, including a plurality of clients (30, 26, 28) coupled to the data store (12) and configured to input read-write requests to the data store (12).

6. A data storage server (10) according to any of claims 1, 2, 3, 4 and 5, wherein a file access request includes a read-write access request.

7. A data storage server (10) according to any of claims 1, 2, 3, 4 and 5, wherein the access lock (90) is implemented by logic operatively associated with a data store controller (16).

8. A data storage server (10) according to any of claims 1, 2, 3, 4 and 5, wherein the server (10) includes an indicator configured to provide an indication of the state of the access lock.

9. A data storage server (10) according to any of claims 1, 2, 3, 4 and 5, wherein the server (10) includes an indicator configured to provide a different indication for each of the IDLE, STREAM and RW states (50, 66, 54) of the access lock.

10. A stored set of instructions executable in conjunction with a data store (12) of a data storage server (10) to control streaming data access and file access to the data store (12), the instructions comprising:
instructions executable to implement an access lock (90) having an IDLE state (50), a STREAM state (66), and an RW state (54), the access lock (90) permitting transition from the IDLE state (50) either to the STREAM state (66) or to the RW state (54) but not permitting transition to both the STREAM state (66) and to the RW state (54) concurrently.

11. A stored set of instructions according to claim 10, wherein when the access lock (90) is in the RW state (54), the instructions enable the access lock (90) to respond to a streaming access request by delaying the streaming access request until the read-write state has been exited.

12. A stored set of instructions according to claim 10 or claim 11, wherein when the access lock (90) is in the STREAM state (66), the instructions enable the access lock (90) to permit concurrent access to the data store (12) in response to more than one streaming access request.

13. A stored set of instructions according to claim 10 or claim 11, wherein when the access lock (90) is in the RW state (54) the instructions enable the access lock (90) to permit concurrent access to the data store (12) in response to more than one file access request.

14. A method of controlling data access requests to a data store (12) of a data storage server (10) that supports data streaming and file access requests, the method comprising:
- in response to granting a request for data streaming access to the data store (12), locking file access to the data store (12) and denying a subsequent file access request;
- in response to granting a request for file access to the data store (12), locking data streaming access to the data store (12) and delaying a subsequent data streaming access request until the file access operation has exited.

15. A method according to claim 14, wherein the method is implemented under control of a processor executable set of stored instructions.
